# EUROPÄISCHE PATENTSCHRIFT

(11) **EP 2 616 720 B1**
(45) Veröffentlichungstag und Bekanntmachung des Hinweises auf die Patenterteilung: **31.12.2014**
(21) Anmeldenummer: 11749842.8
(22) Anmeldetag: 31.08.2011
(51) Int. Cl.: F16K 1/44

(54) **DOPPELSITZVENTIL ZUR TRENNUNG VON MEDIEN**
DOPPELSITZVENTIL ZUR TRENNUNG VON MEDIEN
VANNE À DOUBLE SIÈGE CONÇUE POUR SÉPARER DES MILIEUX

(30) Priorität: 14.09.2010 DE 102010046137
(43) Veröffentlichungstag der Anmeldung: 24.07.2013
(73) Patentinhaber: SUEDMO HOLDING GMBH, 73469 Riesbuerg (DE)
(72) Erfinder: NEUHAUSER, Frank, 73450 Neresheim (DE); DEGER, Werner, 73467 Kirchheim (DE); WELCHNER, Karl, 86738 Deiningen (DE)
(74) Vertreter: Witte, Weller & Partner Patentanwälte mbB
(86) Internationale Anmeldenummer: PCT/EP2011/064997
(87) Internationale Veröffentlichungsnummer: WO 2012/034862

(56) Entgegenhaltungen:
- DE-A1-102007 038 124
- JP-A- 57 154 564

## Beschreibung

Die Erfindung betrifft ein Doppelsitzventil zur Trennung von Medien, mit einem Ventilgehäuse, das Anschlussstutzen für eine erste Rohrleitung und eine zweite Rohrleitung aufweist, mit einem ersten Schließglied und einem diesem zugeordneten ersten Schließgliedsitz, wobei das erste Schließglied in seiner Schließstellung über zumindest ein Dichtelement mit dem ersten Schließgliedsitz dichtend zusammenwirkt, und mit einem vom ersten Schließglied axial beabstandeten zweiten Schließglied und einem diesem zugeordneten zweiten Schließgliedsitz, wobei das zweite Schließglied in seiner Schließstellung über zumindest ein Dichtelement mit dem zweiten Schließgliedsitz dichtend zusammenwirkt, wobei die beiden Schließglieder unabhängig voneinander von ihrem jeweiligen Schließgliedsitz anlüftbar sind, wobei zwischen den beiden Schließgliedern ein Leckageraum vorhanden ist, der in einen Leckageauslauf mündet, und wobei zwischen den beiden Schließgliedern ein Strömungsbarrierenelement angeordnet ist, das beim Anlüften des einen Schließgliedes das Dichtelement und/oder den Schließgliedsitz des anderen Schließgliedes gegen eine Direktanströmung durch ein in den Leckageraum eingeleitetes Medium abschattet, wobei das Strömungsbarrierenelement einen Ringkörper aufweist.

Ein solches Doppelsitzventil ist aus DE 10 2007 038 124 A1 bekannt.

Doppelsitzventile der vorstehend genannten Art werden beispielsweise in der Lebensmittelindustrie in produktführenden prozesstechnischen Anlagen eingesetzt.

Bei derartigen Doppelsitzventilen bestehen hohe Anforderungen an die sichere Trennung der durch die zumindest zwei Rohrleitungen geführten Medien. Die beiden Schließglieder trennen in ihrer Schließstellung die beiden Anschlussstutzen gehäuseinnenseitig dicht gegeneinander ab, und in der gemeinsamen Offenstellung der beiden Schließglieder können die an die beiden Anschlussstutzen angeschlossenen Rohrleitungen über das Gehäuseinnere miteinander kommunizieren.

Eine weitere wesentliche Anforderung an solche Doppelsitzventile besteht darin, dass die Schließglieder einschließlich ihrer Schließgliedsitze und der Leckageraum, der sich zwischen den Schließgliedern befindet, gründlich gereinigt werden können.

Damit nicht alle Prozesse in einer prozesstechnischen Anlage, in der ein solches Doppelsitzventil verwendet wird, zum Zwecke der Reinigung der Schließglieder, der Schließgliedsitze und des Leckageraums abgeschaltet werden müssen, was die Produktivität einer solchen prozesstechnischen Anlage vermindern würde, ist es wünschenswert, wenn der Reinigungsvorgang beispielsweise über eine der beiden Rohrleitungen durchgeführt wird, während in der anderen Rohrleitung weiterhin ein Produktprozess läuft. Zu diesem Zweck sind die beiden Schließglieder unabhängig voneinander von ihrem Schließgliedsitz anlüftbar. Unter "Anlüften" ist bei solchen Doppelsitzventilen zu verstehen, dass eines der beiden Schließglieder von seinem Schließgliedsitz um einen geringen Hub so weit verfahren wird, dass zwischen dem Dichtelement dieses Schließgliedes und dem zugehörigen Schließgliedsitz keine dichtende Anlage mehr besteht. Das andere Schließglied bleibt dabei mit seinem Schließgliedsitz dichtend in Anlage. Durch die Rohrleitung und den Anschlussstutzen, denen das angelüftete Schließglied zugeordnet ist, kann nun ein Reinigungsmedium, üblicherweise eine Reinigungsflüssigkeit, über den Spalt zwischen dem Schließglied und dem zugehörigen Schließgliedsitz in den Leckageraum eingeleitet werden, so dass das Reinigungsmedium den Schließgliedsitz des angelüfteten Schließgliedes und dessen Dichtelement und den Leckageraum gründlich spült. Das Reinigungsmedium, das durch den dem angelüfteten Schließglied zugeordneten Anschlussstutzen zugeführt wird, steht dabei üblicherweise unter einem sehr hohen Druck, der mitunter 10 bar oder mehr betragen kann.

Das Reinigungsmedium läuft über den Leckageraum zum Leckageauslauf und von diesem in die Umgebung des Doppelsitzventils ab.

In dem Dokument DE 10 2005 057 103 A1 wird das Problem beschrieben, dass sich beim Einleiten des Reinigungsmediums gemäß den Forderungen neuerer Standards in dem Leckageraum kein zusätzlicher Überdruck ausbilden darf, der im Extremfall dazu führen könnte, dass das andere, sich in Schließstellung befindende Schließglied von seinem Schließgliedsitz wegbewegt wird, so dass Reinigungsmedium in die andere Rohrleitung gelangen könnte, in der gerade ein Produktprozess läuft.

Zur Lösung dieses Problems wird dort vorgeschlagen, das eine Schließglied mit einem schräggestellten Drainageabschnitt zu versehen, dessen Gesamtdurchlassquerschnitt zumindest etwa so groß ist wie der Öffnungsquerschnitt des größeren der beiden Anschlussstutzen. Das Problem eines Überdruckaufbaus im Leckageraum durch einen zu geringen Abfluss von Reinigungsmedium aus dem Leckageraum bei der Reinigung wird auf diese Weise vermieden, wobei der Leckageauslauf zur Erfüllung dieser Forderung einen Durchtrittsquerschnitt aufweist, der dem Querschnitt des Leckageraums entspricht.

Damit wird jedoch nur das Problem der Vermeidung eines Überdrucks im Leckageraum gelöst. Eine weitere Forderung neuerer Standards besteht darin, dass bei der Beaufschlagung des Leckageraums nach Anlüften eines der beiden Schließglieder das zumindest eine Dichtelement bzw. der Schließgliedsitz des anderen Schließgliedes, das sich in seiner Schließstellung befindet, nicht direkt vom Reinigungsmedium angeströmt wird, weil auch dann Reinigungsmedium in die andere Rohrleitung gelangen könnte, weil das Reinigungsmedium, wie bereits erwähnt, unter einem hohen Druck steht. Bei dem zuvor genannten bekannten Doppelsitzventil wird diese Forderung nicht erfüllt. Wird beispielsweise das untere Schließglied des bekannten Doppelsitzventils angelüftet, und wird unter Druck stehendes Reinigungsmedium in den Spalt zwischen dem Schließglied und dessen Schließgliedsitz in den Leckageraum eingeleitet, trifft das Reinigungsmedium zunächst aufgrund seiner im Wesentlichen axialen Strömungsrichtung auf den Schließgliedsitz und das Dichtelement des in Schließstellung befindlichen oberen Schließgliedes, wodurch Reinigungsmedium an dem Dichtelement des oberen Schließgliedes vorbei in den Ventilgehäusebereich eindringen könnte, durch den gerade ein Produktmedium fließt.

Das vorstehend genannte Problem wird bei dem aus dem eingangs genannten Dokument DE 10 2007 038 124 A1 bekannten Doppelsitzventil durch ein Strömungsbarrierenelement behoben, das beim Anlüften des einen Schließgliedes unter Beaufschlagen des Leckageraums mit Reinigungsmedium das zumindest eine Dichtelement und/oder den Schließgliedsitz des anderen Schließgliedes, das sich in seiner Schließstellung befindet, gegen eine Direktanströmung durch das in den Leckageraum eintretende Reinigungsmedium abschattet. Das Strömungsbarrierenelement verhindert somit, dass das Reinigungsmedium beim Eintritt in den Leckageraum die Dichtung und/oder den Schließgliedsitz des sich in seiner Schließstellung befindenden anderen Schließgliedes unmittelbar beaufschlagt.

JP 57154564 offenbart ein Doppelsitzventil gemäß dem Oberbegriff des Anspruchs 1.

In dem genannten Dokument werden verschiedene Ausgestaltungen des Strömungsbarrierenelements offenbart. Bei allen diesen dort offenbarten Ausgestaltungen des Strömungsbarrierenelements ist es zur Erfüllung der bereits oben genannten Forderung, wonach sich im Leckageraum kein Druck aufbauen darf, erforderlich, dass der sich an den Leckageraum anschließende Leckageauslauf zumindest den gleichen Querschnitt aufweist wie der Leckageraum selbst. Dies hat jedoch den Nachteil, dass das sich an den Leckageraum anschließende Leckageauslaufrohr einen entsprechend großen Durchmesser und damit eine Wand mit großem Umfang aufweisen muss. Dies führt zu einem höheren Materialaufwand und damit zu höheren Gestehungskosten des bekannten Doppelsitzventils.

Es ist daher eine Aufgabe der vorliegenden Erfindung, ein Doppelsitzventil der eingangs genannten Art dahingehend weiterzubilden, dass die oben genannten Forderungen der Vermeidung eines Überdruckaufbaus im Leckageraum sowie der Direktbeaufschlagung der Dichtung und/oder des Schließgliedsitzes des sich in seiner Schließstellung befindlichen Schließgliedes beim Anlüften des anderen Schließgliedes bei gleichzeitiger Kosteneinsparung erfüllt werden können.

Erfindungsgemäß wird diese Aufgabe hinsichtlich des eingangs genannten Doppelsitzventils dadurch gelöst, dass der Ringkörper des Strömungsbarrierenelements in der Anlüftstellung zumindest eines der Schließglieder zusammen mit diesem den Leckageraum in einen ersten Leckageraumabschnitt und einen zweiten Leckageraumabschnitt unterteilt, und dass der Ringkörper so ausgebildet ist, dass Medium durch den Ringkörper hindurch vom ersten Leckageraumabschnitt in den zweiten Leckageraumabschnitt übertreten kann, derart, dass der Druck im zweiten Leckageraumabschnitt gegenüber dem Druck im ersten Leckageraumabschnitt reduziert ist, und das Medium über den zweiten Leckageraumabschnitt zum Leckageauslauf gelangt.

Das erfindungsgemäße Doppelsitzventil erfüllt durch eine Weiterbildung des Strömungsbarrierenelements sowohl die Forderung der Vermeidung einer Direktbeaufschlagung der Dichtung und/oder des Schließgliedsitzes des sich in seiner Schließstellung befindlichen Schließgliedes beim Anlüften des anderen Schließgliedes als auch der Vermeidung eines Überdruckaufbaus im Leckageraum. Dies ist bei dem erfindungsgemäßen Doppelsitzventil dadurch realisiert, dass der Ringkörper in der Anlüftstellung eines der beiden Schließglieder zusammen mit diesem angelüfteten Schließglied den Leckageraum in einen ersten Leckageraumabschnitt und einen zweiten Leckageraumabschnitt unterteilt, die miteinander derart kommunizieren, dass Medium durch den Ringkörper hindurch vom ersten Leckageraumabschnitt in den zweiten Leckageraumabschnitt unter Druckabfall übertreten kann. Das Medium kann dann im Wesentlichen drucklos bis zum Leckageauslauf strömen. Das sich in seiner Schließstellung befindende Schließglied befindet sich dabei im zweiten Leckageraumabschnitt und ist somit vollkommen gegen ein Durchtreten von Reinigungsmedium an seiner Dichtung vorbei in das produktführende Ventilgehäuse geschützt.

Bei dem erfindungsgemäßen Doppelsitzventil hat das Strömungsbarrierenelement somit zwei Funktionen, um die beiden vorstehend genannten Forderungen zu erfüllen. Beim Anlüften des einen Schließgliedes tritt das Reinigungsmedium unter hohem Druck in den ersten Leckageraumabschnitt ein und gelangt unter Druckminderung und Flussratenminderung dann in den inneren Leckageraumabschnitt, von wo es zum Leckageauslauf gelangt. Dies hat nun den erheblichen Vorteil, dass der Leckageauslauf nur einen wesentlich geringeren Querschnitt erfordert als der Querschnitt des Leckageraums selbst. Damit kann das Leckageauslaufrohr mit einem wesentlich geringeren Durchmesser ausgebildet werden, was Material und damit Gestehungskosten einspart.

Der Ringkörper des Strömungsbarrierenelements des erfindungsgemäßen Doppelsitzventils weist, damit das Medium durch den Ringkörper hindurchtreten kann, Durchlassbereiche auf, die dem Medium vorzugsweise eine Strömungsrichtung vorgeben, die möglichst unmittelbar in Richtung zum Leckageauslauf weist. Die Durchlassbereiche bewirken dabei eine Drosselung des Mediums.

In einer bevorzugten Ausgestaltung wird der Druck im zweiten Leckageraumabschnitt beim Übertritt von Medium vom ersten Leckageraumabschnitt im Wesentlichen auf Atmosphärendruck am Leckageauslauf oder sogar auf einen Druck unterhalb des Atmosphärendrucks reduziert.

In dieser Ausgestaltung wird die Forderung der Vermeidung eines Überdruckes im Leckageraum am besten erfüllt.

In einer weiteren bevorzugten Ausgestaltung weist der Ringkörper des Strömungsbarrierenelements einen sich radial erstreckenden Ringkörperabschnitt und einen sich daran anschließenden, sich axial erstreckenden Ringkörperabschnitt auf, wobei der axiale Ringkörperabschnitt beim Anlüften des einen Schließgliedes und Beaufschlagen des ersten Leckageraumabschnitts mit Medium mit diesem Schließglied dichtend in Anlage steht.

Bei dieser Ausgestaltung ist der Ringkörper des Strömungsbarrierenelements im Schnitt parallel zur Längsrichtung des Doppelsitzventils zumindest L-förmig, vorzugsweise jedoch T-förmig ausgebildet, indem sich vom radialen Ringkörperabschnitt zu beiden Seiten desselben jeweils ein axial erstreckender Ringkörperabschnitt weg erstreckt. Der radiale Ringkörperabschnitt bildet zusammen mit dem axialen Ringkörperabschnitt, dem angelüfteten Schließglied und der Leckageraumgehäusewand den ersten Leckageraumabschnitt, so dass sich bei dieser Ausgestaltung der erste Leckageraumabschnitt radial außerhalb des zweiten Leckageraumabschnitts befindet. Der radiale Ringkörperabschnitt übernimmt dabei vorzugsweise die Funktion der Abschattung der Dichtung bzw. des Schließgliedsitzes des sich in Schließstellung befindlichen Schließglieds, und der axiale Ringkörperabschnitt übernimmt die Funktion des Durchflusses des Mediums in den zweiten Leckageraumabschnitt.

Vorzugsweise kommt der axiale Ringkörperabschnitt beim Anlüften des einen Schließgliedes mit diesem Schließglied erst dichtend in Anlage, wenn der erste Leckageraumabschnitt mit Medium beaufschlagt wird.

Dies hat den Vorteil, dass im Betriebszustand des Doppelsitzventils, in dem beide Schließglieder in ihrer Schließstellung sind, Leckage nicht nur durch den Ringkörper hindurch in den zweiten Leckageraumabschnitt gelangen kann, sondern auch über die "Undichtigkeit" zwischen dem axialen Ringkörperabschnitt und dem jeweiligen Schließglied, wodurch die Leckageerkennung auch bei dem erfindungsgemäßen Doppelsitzventil verbessert ist.

Im Zusammenhang mit der zuvor genannten Ausgestaltung ist es weiterhin bevorzugt, wenn der axiale Ringkörperabschnitt und das Schließglied sich gegenseitig hintergreifende Ränder aufweisen, über die der axiale Ringkörperabschnitt mit dem Schließglied dichtend in Anlage kommt.

Hierbei wird zum einen auf einfache Weise beim Anlüften des einen Schließgliedes die dichtende Anlage des axialen Ringkörperabschnitts mit dem angelüfteten Schließglied sichergestellt, zum anderen wird das Strömungsbarrierenelement in diesem Betriebszustand auch in vorbestimmter Position relativ zu dem angelüfteten Schließglied an diesem gehalten bzw. an diesem verriegelt, so dass beim Einleiten von unter Druck stehendem Medium in den ersten Leckageraumabschnitt das Strömungsbarrierenelement nicht unerwünscht so weit weggedrückt wird, dass die dichtende Anlage zwischen dem axialen Ringkörperabschnitt und dem angelüfteten Schließglied aufgehoben wird.

In einer weiteren bevorzugten Ausgestaltung ist das Strömungsbarrierenelement lose zwischen den Schließgliedern und relativ zu diesen axial beweglich angeordnet.

Die axiale Beweglichkeit des Strömungsbarrierenelements relativ zu den beiden Schließgliedern hat den Vorteil, dass auch der Gehäusebereich des Leckageraums, wo sich das Strömungsbarrierenelement befindet, einer Reinigung gut zugänglich ist. Die lose Anordnung des Strömungsbarrierenelements zwischen den Schließgliedern bedeutet, dass das Strömungsbarrierenelement mit keinem der beiden Schließglieder starr verbunden ist, und somit beim Einleiten eines unter Druck stehenden Reinigungsmediums axial geringfügig aus seiner ursprünglichen Lage im Schließzustand beider Schließglieder zur verbesserten Reinigung weg bewegt werden kann.

In einer weiteren bevorzugten Ausgestaltung weist der Ringkörper des Strömungsbarrierenelements eine Mehrzahl von Durchtrittsöffnungen auf, durch die Medium vom ersten Leckageraumabschnitt in den zweiten Leckageraumabschnitt übertreten kann, wobei die Anzahl und/oder der Einzelquerschnitt der Durchtrittsöffnungen so bemessen ist, dass der Druck im zweiten Leckageraumabschnitt beim Übertritt von Medium durch die Durchtrittsöffnungen im Wesentlichen auf Atmosphärendruck oder darunter liegt.

In dieser bevorzugten Ausgestaltung des Strömungsbarrierenelements weist der Ringkörper desselben eine Mehrzahl von Durchtrittsöffnungen als Durchlassbereiche auf. Solche Durchtrittsöffnungen in Form von kleinen Bohrungen bewirken beim Durchtritt von Medium eine starke Beschleunigung des Mediums, so dass das aus den Durchtrittsöffnungen austretende Medium in der Art einer Wasserstrahlpumpe eine Saugwirkung im zweiten Leckageraumabschnitt bewirkt, wodurch ein Druckaufbau im zweiten Leckageraumabschnitt auf jeden Fall vermieden wird. Im Gegenteil ist es bei entsprechender Ausgestaltung der Durchtrittsöffnungen möglich, im zweiten Leckageraumabschnitt einen Unterdruck zu erzeugen. Im Ringkörper des Strömungsbarrierenelements können beispielsweise in Umfangsrichtung um die Längsachse des Doppelsitzventils verteilt jeweils drei solcher Durchtrittsöffnungen vorhanden sein, und zwar drei für das Anlüften des einen Schließgliedes und die anderen drei für das Anlüften des anderen Schließgliedes. Die Durchtrittsöffnungen können beispielsweise einen Einzeldurchmesser von etwa 1 bis 5 mm aufweisen. Derartig kleine Durchtrittsöffnungen haben den Vorteil, dass bei entsprechender Orientierung derselben dem durchtretenden Medium eine Richtung vorgegeben werden kann, die unmittelbar in den Leckageauslauf führt und somit eine Verspritzung des Mediums im Leckageraum vermeidet, die zu einem verschlechterten Ablaufen des Mediums aus dem Leckageraum und damit zu einem Duckaufbau Anlass geben kann.

In einer weiteren bevorzugten Ausgestaltung ist der Leckageraum über eine oder mehrere Drainageöffnungen in einem der beiden Schließglieder mit dem Leckageauslauf verbunden, und die Durchtrittsöffnungen in dem Ringkörper sind auf die eine oder mehreren Drainageöffnungen ausgerichtet.

Hierbei ist von Vorteil, dass das durch die Durchtrittsöffnungen hindurchtretende Medium unmittelbar auf die Drainageöffnungen gerichtet ist. Da das Medium beim Durchtritt durch die Durchtrittsöffnungen eine hohe Strömungsgeschwindigkeit aufweist, wird somit ein Auftreffen der Mediumstrahlen auf Wandabschnitte des Gehäuses oder andere Teile vermieden, was nachteiligerweise zu einem Verspritzen des Mediums im Leckageraum und damit möglicherweise zu einer zu vermeidenden Beaufschlagung der Dichtung und/oder des Schließgliedsitzes des sich in Schließstellung befindlichen Schließgliedes führen könnte.

Außerdem sind die Durchtrittsöffnungen untereinander so ausgerichtet, dass sich die gedachten Verlängerungen der Durchtrittsöffnungen nicht vor den Drainageöffnungen schneiden, so dass auch ein Aufeinandertreffen der durch die Durchtrittsöffnungen hindurchtretenden Mediumstrahlen, was ebenfalls zu einem Verspritzen von Medium im Leckageraum führen kann, vermieden wird.

In einer weiteren bevorzugten Ausgestaltung weiten sich die eine oder mehreren Drainageöffnungen zum Leckageraum hin auf.

Hierbei wird der Vorteil erzielt, dass die leckageraumseitigen Enden der Drainageöffnungen keine Prallflächen bilden, auf die die durch die Durchtrittsöffnungen hindurchtretenden Mediumstrahlen senkrecht auftreffen. Vielmehr wird durch die leckageraumseitig aufgeweitete und damit abgerundete Form der Drainageöffnungen ein besonders strömungsgünstiges Profil der Drainageöffnungen geschaffen.

In einer weiteren bevorzugten Ausgestaltung ist das Strömungsbarrierenelement verdrehgesichert zwischen den Schließgliedern angeordnet.

Diese Maßnahme ist insbesondere mit den zuvor genannten Maßnahmen von Vorteil, wonach der Ringkörper eine Mehrzahl von Durchtrittsöffnungen aufweist, die auf eine oder mehrere Drainageöffnungen ausgerichtet sind. Durch die Verdrehsicherung des Strömungsbarrierenelements bleibt diese Ausrichtung zwischen den Durchtrittsöffnungen im Ringkörper und den Drainageöffnungen im Betrieb des Doppelsitzventils sicher erhalten.

In einer weiteren bevorzugten Ausgestaltung liegt das Strömungsbarrierenelement gehäuseseitig über eine Dichtung oder ein Gleitelement an dem Gehäuse an.

Eine Dichtung hat hier den Vorteil, dass der erste Leckageraumabschnitt mit Ausnahme des gewollten Durchtritts von Medium durch den Ringkörper des Strömungsbarrierenelements hindurch auch bei hohen Drücken gegen den zweiten Leckageraumabschnitt abgedichtet ist. Ein Gleitelement hat dagegen, insbesondere in Verbindung mit der losen Anordnung des Strömungsbarrierenelements zwischen den beiden Schließgliedern, den Vorteil, dass das Strömungsbarrierenelement axial leicht beweglich ist, und es nicht zu einer axialen Blockierung des Strömungsbarrierenelements kommen kann.

Alternativ zu den zuvor genannten Ausgestaltungen ist es jedoch auch möglich, dass das Strömungsbarrierenelement ohne zusätzliche Dichtung oder Gleitelement unmittelbar an dem Gehäuse anliegt.

Diese Ausgestaltung hat den Vorteil, dass das Strömungsbarrierenelement besonders kostengünstig hergestellt werden kann, weil auf eine zusätzliche Dichtung oder ein zusätzliches Gleitelement verzichtet wird. In diesem Fall kann das Strömungsbarrierenelement, bzw. der Ringkörper desselben, radial außenseitig mit einer Wulst oder Nase versehen sein, die am Gehäuse anliegt. Diese Ausgestaltung eignet sich insbesondere dann, wenn das Strömungsbarrierenelement aus einem Kunststoff gefertigt ist.

In einer weiteren bevorzugten Ausgestaltung steht der Ringkörper des Strömungsbarrierenelements in der Schließstellung beider Schließglieder mit keinem der Schließglieder dichtend in Anlage.

Diese Maßnahme hat den Vorteil, dass das Strömungsbarrierenelement in der Schließstellung beider Schließglieder die Leckageerkennung nicht beeinträchtigt, d.h. bei einer Undichtigkeit zumindest eines der Dichtelemente der beiden Schließglieder kann trotz Vorhandenseins des Strömungsbarrierenelements eine Leckage detektiert werden, da die Leckage zwischen dem jeweiligen Schließglied und dem Strömungsbarrierenelement in den Leckageraum eindringen kann, was dann entweder durch Austritt der Leckage aus dem Leckageauslauf oder durch entsprechende Detektoren erfasst werden kann.

In einer weiteren bevorzugten Ausgestaltung ist zumindest der Ringkörper des Strömungsbarrierenelements aus einem Kunststoff, insbesondere PEEK, gefertigt.

Der Vorteil dieser Maßnahme besteht in der ebenfalls kostengünstigen Herstellbarkeit des Strömungsbarrierenelements einerseits, und zum anderen in Verbindung mit einer der oben genannten Ausgestaltungen, wonach der axiale Ringkörperabschnitt und das Schließglied sich gegenseitig hintergreifende Ränder aufweisen, ist ein Kunststoff aus Gründen der einfacheren Montage des Doppelsitzventils von Vorteil, da der entsprechende Rand des einen oder beider axialen Ringkörperabschnitte des Ringkörpers des Strömungsbarrierenelements durch Einklicken mit dem jeweiligen Schließglied in Verbindung gebracht werden kann.

Weitere Vorteile und Merkmale ergeben sich aus der nachfolgenden Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird mit Bezug auf diese hiernach näher beschrieben. Es zeigen:
- Fig. 1: ein Doppelsitzventil in einem Ausschnitt und im Längsschnitt, wobei das Doppelsitzventil in der Schließstellung gezeigt ist;
- Fig. 2: einen Ausschnitt des Doppelsitzventils in Fig. 1 im Bereich seiner beiden Schließglieder im gegenüber Fig. 1 vergrößerten Maßstab;
- Fig. 3: einen Ausschnitt des Doppelsitzventils in Fig. 1 im Bereich seiner Schließglieder, wobei das Doppelsitzventil in seiner Offenstellung gezeigt ist;
- Fig. 4: ein Strömungsbarrierenelement des Doppelsitzventils in Fig. 1 in Alleinstellung und im Längsschnitt;
- Fig. 5: das Strömungsbarrierenelement in Fig. 4 in perspektivischer Darstellung;
- Fig. 6: ein Schließglied des Doppelsitzventils in Fig. 1 in Alleinstellung und in perspektivischer Darstellung;
- Fig. 7: einen Ausschnitt des Doppelsitzventils in Fig. 1 im Bereich seiner beiden Schließglieder, wobei eines der beiden Schließglieder angelüftet ist; und
- Fig. 8: einen Ausschnitt des Doppelsitzventils in Fig. 1 im Bereich seiner Schließglieder, wobei das andere Schließglied angelüftet ist.

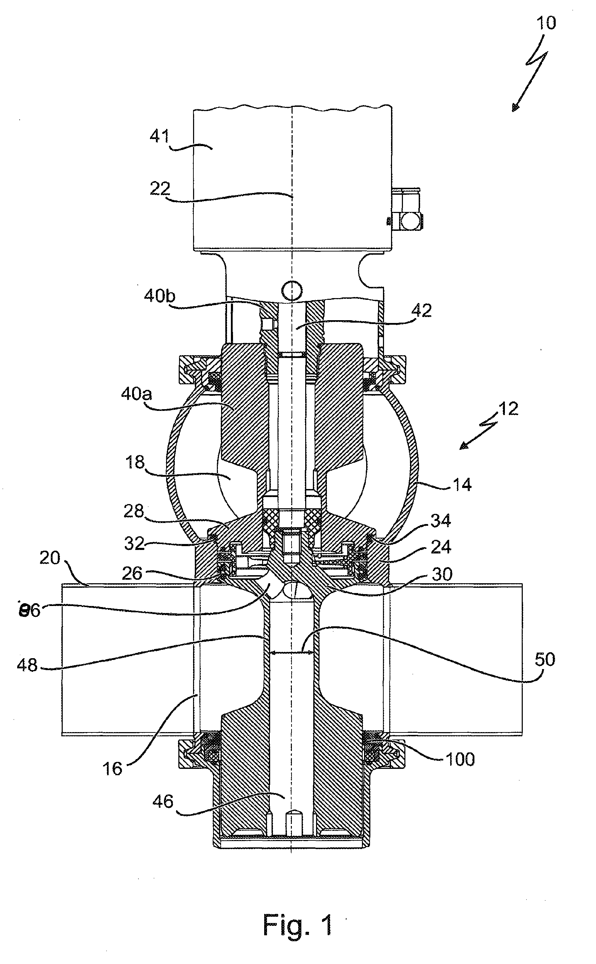

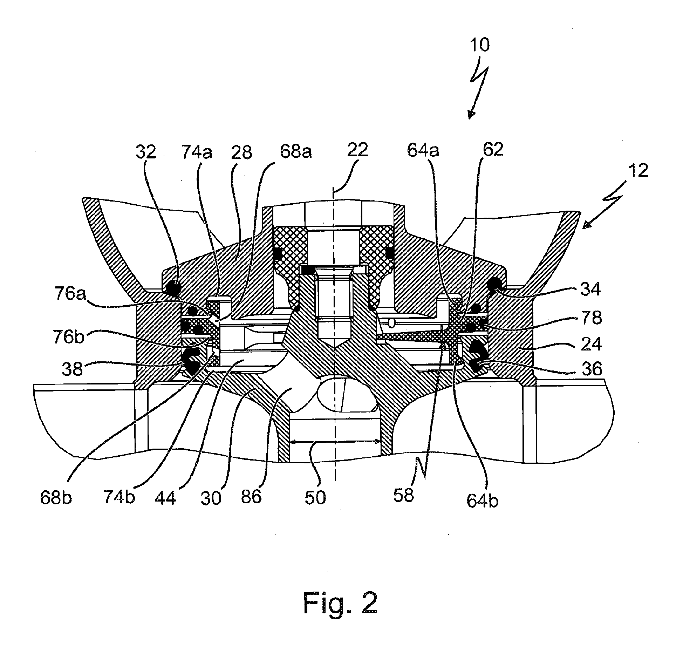

In Fig. 1 ist ein mit dem allgemeinen Bezugszeichen 10 versehenes Doppelsitzventil zur Trennung feindlicher Medien dargestellt. Weitere Einzelheiten des Doppelsitzventils 10 und seine Funktionsweise sind in Fig. 2 bis 8 dargestellt.

Das Doppelsitzventil 10 wird beispielsweise in einer lebensmitteltechnischen Anlage eingesetzt.

Das Doppelsitzventil 10 weist ein Ventilgehäuse 12 auf, das einen ersten Ventilgehäuseabschnitt 14 und einen zweiten Ventilgehäuseabschnitt 16 aufweist. An dem ersten Ventilgehäuseabschnitt 14 ist ein erster Anschlussstutzen 18 zum Verbinden einer nicht dargestellten ersten Rohrleitung mit dem Doppelsitzventil 10, und an dem zweiten Ventilgehäuseabschnitt 16 ist ein zweiter Anschlussstutzen 20 zum Verbinden einer weiteren, nicht dargestellten Rohrleitung mit dem Doppelsitzventil 10 angeordnet, wobei die Anschlussstutzen 18 und 20 in dem gezeigten Ausführungsbeispiel um 90° bezüglich einer Längsmittelachse 22 des Doppelsitzventils 10 zueinander versetzt angeordnet sind. Die Längsmittelachse 22 definiert in der vorliegenden Beschreibung die axiale Richtung des Doppelsitzventils 10 und seiner Teile.

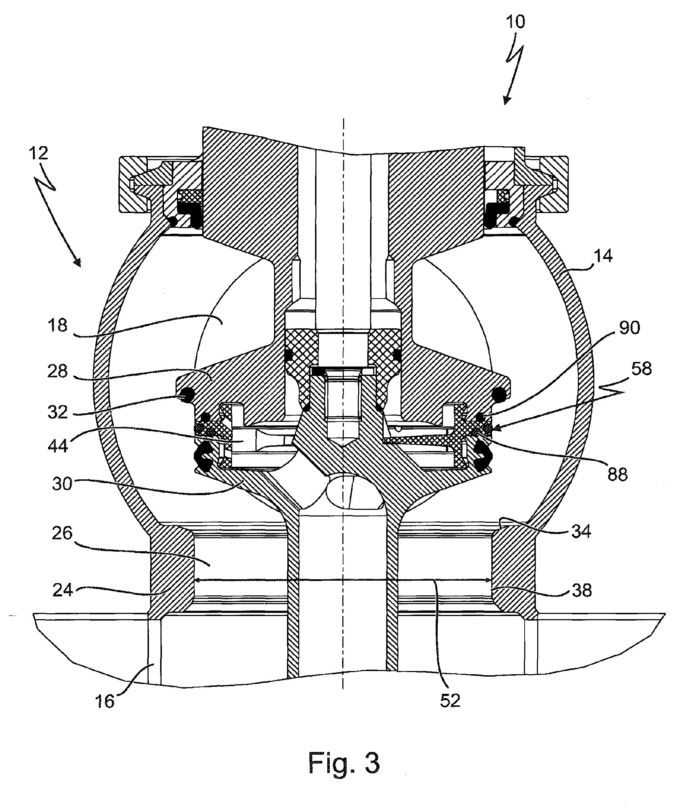

Zwischen dem ersten Ventilgehäuseabschnitt 14 und dem zweiten Ventilgehäuseabschnitt 16 weist das Ventilgehäuse 12 einen Ventilgehäuseabschnitt 24 auf, der innenseitig eine Verbindungsöffnung 26 begrenzt, über die die Innenräume der Ventilgehäuseabschnitte 14 und 16 im Öffnungszustand des Doppelsitzventils 10 miteinander kommunizieren, wie dies in Fig. 3 dargestellt ist.

In dem Ventilgehäuse 12 sind ein erstes Schließglied 28 und ein zweites Schließglied 30 angeordnet. Das erste Schließglied 28 weist ein Dichtelement 32 auf, das in der Schließstellung des Schließglieds 28 gemäß Fig. 1 und 2 mit einem ersten Schließgliedsitz 34 dichtend in Anlage steht, wobei der erste Schließgliedsitz 34 an einem oberen Ende des Verbindungsabschnitts 24 des Ventilgehäuses 12 angeordnet ist. Das zweite Schließglied 30 weist ebenfalls ein Dichtelement 36 auf, das mit einem zweiten Schließgliedsitz 38 dichtend in Anlage steht, wenn das zweite Schließglied 30 sich in seiner Schließstellung befindet, wie in Fig. 1 und 2 dargestellt ist.

Das erste Schließglied 28 ist mit einem Antriebskörper 40a, 40b verbunden, wobei der Antriebskörper 40a, 40b mit einem nicht näher dargestellten und an sich bekannten Steuermechanismus 41 zum axialen Verfahren des Schließglieds 28 verbunden ist. Das zweite Schließglied 30 ist ebenfalls mit einem Antriebskörper 42 verbunden, der mit dem Steuermechanismus 41 zum axialen Verfahren des Schließgliedes 30 verbunden ist.

Zwischen dem ersten Schließglied 28 und dem zweiten Schließglied 30 befindet sich ein Leckageraum 44, der im Schließzustand des Doppelsitzventils 10 gemäß Fig. 1 und 2 dazu dient, bei einer Undichtigkeit eines oder beider der Dichtelemente 32, 36 einen Ablauf von Leckage zu ermöglichen, um einen Leckagezustand zu detektieren. Dazu ist der Leckageraum 44 mit einem Leckageauslauf 46 verbunden. Der Leckageauslauf 46 wird durch einen rohrförmigen Fortsatz des zweiten Schließgliedes 30 gebildet.

Wie aus Fig. 1 hervorgeht, weist der Leckageauslauf 46 einen Durchtrittsquerschnitt 50 auf, der kleiner ist als ein Querschnitt 52 der Verbindungsöffnung 26 im Verbindungsabschnitt 24 des Gehäuses 12. Der Durchtrittsquerschnitt 50 ist ebenfalls kleiner als der Querschnitt des Leckageraums 44, der im Wesentlichen dem Querschnitt 52 der Verbindungsöffnung 26 entspricht.

Fig. 1 zeigt die Schließglieder 28 und 30 in ihrer gemeinsamen Schließstellung, in der das Innere des Ventilgehäuseabschnitts 14 von dem Inneren des Ventilgehäuseabschnitts 16 hermetisch dicht abgeriegelt ist.

Fig. 3 zeigt beide Schließglieder 28 und 30 in ihrer gemeinsamen Offenstellung, in der die Schließglieder 28 und 30 durch entsprechende Betätigung des Steuermechanismus 41 über Vermittlung der Antriebskörper 40a, 40b und 42 von ihrem jeweiligen Schließgliedsitz 34, 38 nach oben axial verfahren sind, so dass die Verbindungsöffnung 26 zwischen den Ventilgehäuseabschnitten 14 und 16 offen ist. In diesem Fall kann beispielsweise ein Produktmedium aus dem Anschlussstutzen 18 in den Anschlussstutzen 20 überführt werden.

Das Doppelsitzventil 10 besitzt zusätzlich zu den in Fig. 1 bzw. 2 und 3 gezeigten Betriebszuständen zwei weitere Betriebszustände, die als "Anlüften" jeweils eines der beiden Schließglieder 28 oder 30 bezeichnet wird.

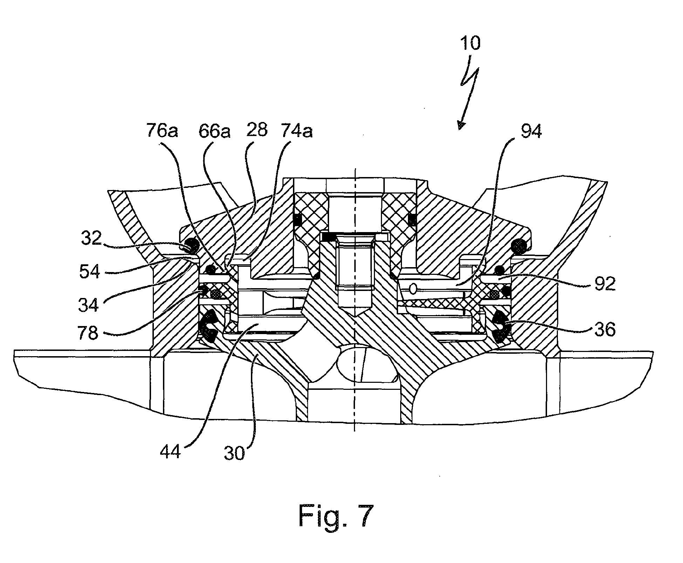

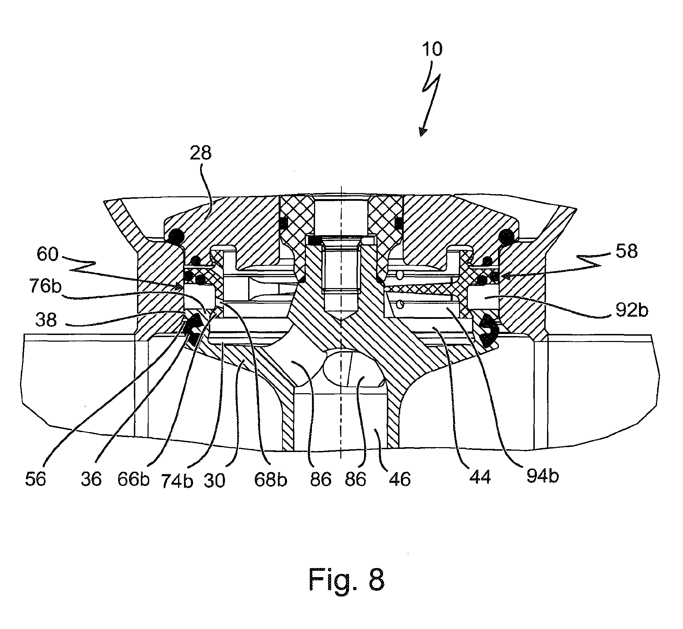

Die beiden Betriebszustände des Anlüftens sind in Fig. 7 und 8 dargestellt.

In Fig. 7 ist das Anlüften des ersten Schließgliedes 28 gezeigt, d.h. das erste Schließglied 28 ist axial von seinem Schließgliedsitz 34 so weit abgehoben, dass das Dichtelement 32 mit dem Schließgliedsitz 34 außer Anlage steht. Das zweite Schließglied 30 befindet sich dagegen weiterhin in seiner Schließstellung, wie in Fig. 7 gezeigt ist.

Fig. 8 zeigt das Anlüften des zweiten Schließgliedes 30, wobei das zweite Schließglied 30 gemäß Fig. 8 um einen Anlüfthub axial nach unten abgehoben ist, und zwar gerade so weit, dass das Dichtelement 36 mit dem zugehörigen Schließgliedsitz 38 außer Anlage steht. Beim Anlüften des zweiten Schließgliedes 30 bleibt das erste Schließglied 28 in seiner Schließstellung, wie aus Fig. 8 hervorgeht.

Das Anlüften des ersten Schließgliedes 28 gemäß Fig. 7 dient dazu, ein Reinigungsmedium durch einen Spalt 54 zwischen dem Schließglied 28 und dem Schließgliedsitz 34 in den Leckageraum 44 einzuleiten. Das Reinigungsmedium wird dabei über den Anschlussstutzen 18 und der damit verbundenen Rohrleitung zugeführt. Mit dem Reinigungsmedium wird vor allem das Dichtelement 32 und der Schließgliedsitz 34 und auch das Innere des Leckageraums 44 gründlich gereinigt. Das zugeführte Reinigungsmedium steht dabei üblicherweise unter einem hohen Druck, der mitunter 10 bar oder mehr betragen kann.

Beim Anlüften des zweiten Schließgliedes 30 wird ein unter Druck stehendes Reinigungsmedium über den Anschlussstutzen 20 und die damit verbundene Rohrleitung zugeführt und über einen Spalt 56 zwischen dem Schließglied 30 und dem Schließgliedsitz 38 in den Leckageraum 44 zugeführt.

In beiden Fällen gemäß Fig. 7 und 8 muss gewährleistet sein, dass das eingeleitete Reinigungsmedium das jeweils in dichtender Anlage stehende Dichtelement (Dichtelement 36 in Fig. 7 und Dichtelement 32 in Fig. 8) und/oder den zugehörigen Schließgliedsitz 34 bzw. 38 nicht derart anströmt, dass das Reinigungsmedium zwischen dem in dichtender Anlage stehendem Dichtelement 32 bzw. 36 und zugehörigem Schließgliedsitz 34 und 38 hindurch in den jeweils anderen Ventilgehäuseabschnitt 14 bzw. 16 eindringt. Damit wird gewährleistet, dass durch den jeweiligen Ventilgehäuseabschnitt 14 oder 16, dessen zugehöriges Schließglied 28 bzw. 30 sich in seiner Schließstellung befindet, ein Produktprozess ablaufen kann, ohne dass das Produktmedium durch das Reinigungsmedium kontaminiert wird.

Neben der vorstehend genannten Anforderung, gemäß der beim Anlüften des einen Schließglieds 28 bzw. 30 das Dichtelement 32 bzw. 36 und/oder der Schließgliedsitz 34 bzw. 38 des anderen Schließgliedes 28 bzw. 30 nicht vom Reinigungsmedium unmittelbar beaufschlagt wird, besteht eine weitere Anforderung darin, dass das Reinigungsmedium im Leckageraum 44 keinen Druck aufbauen darf, sondern das Reinigungsmedium muss so gut wie möglich drucklos zum Leckageauslauf 46 abgeführt werden.

Beide vorstehend genannten Anforderungen werden bei dem Doppelsitzventil 10 durch ein Strömungsbarrierenelement 58 gewährleistet, das zwischen dem ersten Schließglied 28 und dem zweiten Schließglied 30 im Leckageraum 44 angeordnet ist.

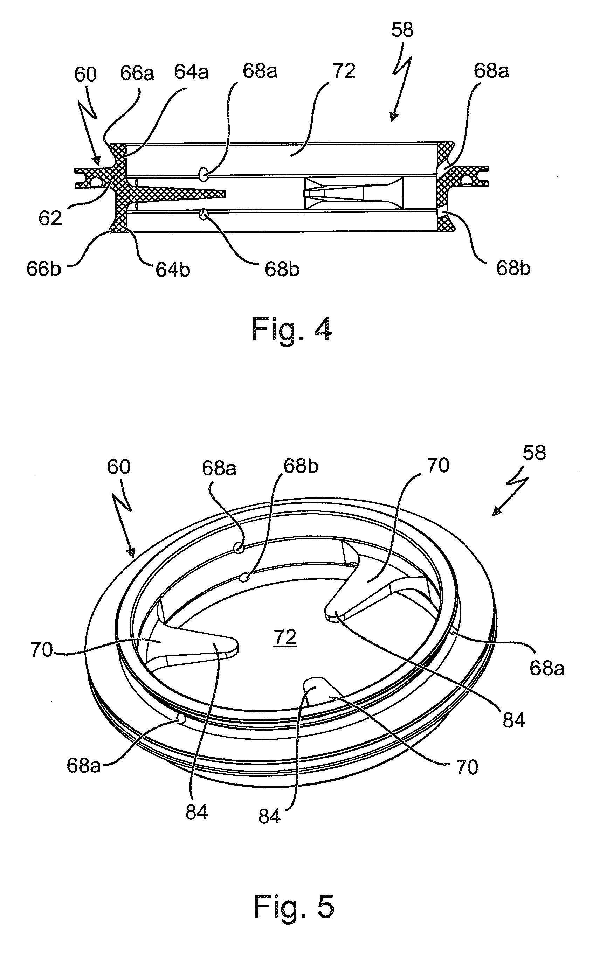

Mit Bezug auf Fig. 4 und 5 wird zunächst das Strömungsbarrierenelement 58 näher beschrieben.

Das Strömungsbarrierenelement 58 weist einen sich vollumfänglich (bezüglich der Längsachse 22) erstreckenden Ringkörper 60 auf. Der Ringkörper 60 weist einen sich radial erstreckenden und radial äußeren Ringkörperabschnitt 62 und jeweils einen sich daran radial innen anschließenden und sich axial erstreckenden Ringkörperabschnitt 64a, 64b auf, die sich jeweils ebenfalls vollumfänglich (in Bezug auf die Längsachse 22) erstrecken. Der axiale Ringkörperabschnitt 64a und der axiale Ringkörperabschnitt 64b weisen jeweils einen Rand 66a bzw. 66b auf, die sich vollumfänglich erstrecken, und die einen radial nach außen zeigenden vorspringenden Ringflansch ausbilden.

In dem axialen Ringkörperabschnitt 64a sind eine Mehrzahl, im gezeigten Ausführungsbeispiel umfänglich verteilt drei, Durchtrittsöffnungen 68a ausgebildet, wobei die Orientierung der Durchtrittsöffnungen 68a in Bezug auf die Horizontale schräg ist.

In dem axialen Ringkörperabschnitt 64b sind ebenfalls eine Mehrzahl, hier drei, Durchtrittsöffnungen 68b ausgebildet, von denen in Fig. 4 und 5 jeweils nur eine zu sehen ist, und die ebenfalls in Bezug auf die Horizontale schräg gerichtet sind, allerdings mit einer geringeren Neigung als die Durchtrittsöffnungen 68a.

Von dem Ringkörper 60 erstrecken sich radial nach innen eine Mehrzahl, hier drei, Finger 70, die sich radial nach innen zur Längsmittelachse des Strömungsbarrierenelements 58 zeigend erstrecken, jedoch vor der Längsmittelachse enden. Im Übrigen ist ein Innenraum 72 des Strömungsbarrierenelements 58 in axialer Richtung beidseitig offen.

Das Strömungsbarrierenelement 58 ist insgesamt einstückig aus einem Kunststoff, hier aus PEEK, gefertigt.

Mit Bezug u.a. auf Fig. 2 wird nachfolgend die Einbaulage des Strömungsbarrierenelements 58 in dem Doppelsitzventil 10 beschrieben.

Das erste Schließglied 28 weist eine bezüglich der Längsachse 22 vollumfängliche Ausnehmung 74a auf, in die der axiale Ringkörperabschnitt 64a des Strömungsbarrierenelements 58 eingreift. Entsprechend weist das Schließglied 30 eine Ausnehmung 74b auf, in die der axiale Ringkörperabschnitt 64b des Strömungsbarrierenelements 58 eingreift.

Die Ausnehmung 74a weist einen radial äußeren Rand 76a auf, der radial nach innen vorspringt und sich vollumfänglich um die Längsachse 22 erstreckt. Die Ausnehmung 74b des Schließgliedes 30 weist ebenfalls radial außen einen radial nach innen vorspringenden Rand 76b auf, der sich vollumfänglich um die Längsachse 22 erstreckt.

Die Durchmesser der Ränder 76a und 76b sind etwas kleiner als die Durchmesser der Ränder 66a, 66b des Strömungsbarrierenelements 58, so dass sich die Ränder 66a, 66b und die Ränder 76a, 76b gegenseitig hintergreifen. Da das Strömungsbarrierenelement 58 aus Kunststoff gefertigt ist, wird das Strömungsbarrierenelement 58 bei der Montage des Doppelsitzventils 10 in die entsprechenden Ausnehmungen 74a, 74b eingeklickt, so dass die axialen Ringkörperabschnitte 64a, 64b in den Ausnehmungen 74a, 74b gefangen sind und nur unter Kraftaufwand wieder von den Schließgliedern 28 bzw. 30 abgenommen werden können. Hierzu sind Kräfte erforderlich, die einem Druck von mindestens 13 bar entsprechen.

Das Strömungsbarrierenelement 58 ist zwischen den beiden Schließgliedern 28 und 30 lose und relativ zu diesen axial beweglich angeordnet. Wie aus Fig. 2 hervorgeht, ist die axiale Tiefe der Ausnehmungen 74a und 74b entsprechend zumindest so groß bemessen wie die axiale Erstreckung der axialen Ringkörperabschnitte 64a und 64b, so dass sich die axialen Ringkörperabschnitte 64a und 64b in den Ausnehmungen 74a und 74b axial bewegen können.

Der radiale Ringkörperabschnitt 62 des Strömungsbarrierenelements 58 weist einen solchen Durchmesser auf, dass er an der Innenwand des Verbindungsabschnitts 24 des Gehäuses 12 anliegt. In dem gezeigten Ausführungsbeispiel ist der radiale Ringkörperabschnitt 62 mit einer Radialdichtung 78 versehen, die dichtend gegen die Innenwand des Verbindungsabschnitts 24 anliegt (mit Ausnahme in der Offenstellung gemäß Fig. 3). Die Dichtung 78 kann jedoch auch weggelassen werden, wobei dann der radiale Ringkörperabschnitt 62 radial außen vorzugsweise in einem Wulst oder einer Dichtlippe endet, und der Wulst bzw. die Dichtlippe dann an der Innenwand des Verbindungsabschnitts 24 anliegt. Des Weiteren ist es möglich, am radial äußeren Rand des radialen Ringkörperabschnitts 62 anstatt einer Dichtung ein Gleitelement vorzusehen.

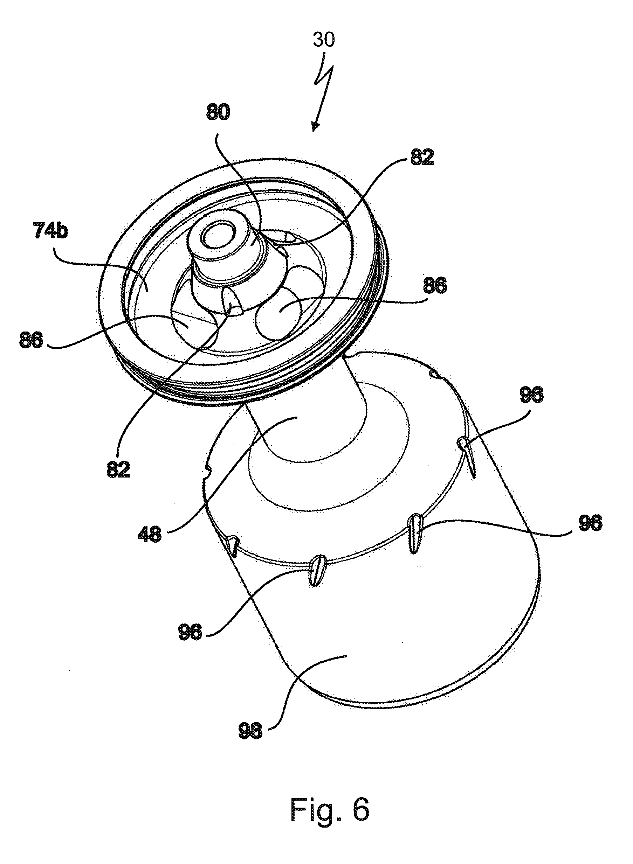

Bevor auf weitere Einzelheiten des Strömungsbarrierenelements 58, seine Einbaulage und seine Funktion eingegangen wird, wird zunächst mit Bezug auf Fig. 6 das zweite Schließglied 30 beschrieben.

Das zweite Schließglied 30 weist mittig in Bezug auf die Längsachse 22 einen Mittelabschnitt 80 auf, über den das zweite Schließglied 30 an dem Antriebskörper 42 montiert ist. An dem Mittelabschnitt 80 sind umfänglich verteilt mehrere, hier drei, Ausnehmungen 82 (in Fig. 6 sind nur zwei zu sehen) ausgebildet. Diese Ausnehmungen 82 dienen der Aufnahme und Führung der jeweiligen Enden 84 der Finger 70 des Strömungsbarrierenelements 58. Durch die Aufnahme der Enden 84 der Finger 70 in den Ausnehmungen 82 ist das Strömungsbarrierenelement 58 axial beweglich, jedoch gegenüber der Längsachse 22 verdrehfest zwischen den Schließgliedern 28 und 30 angeordnet.

In dem Schließglied 30 sind um den Mittelabschnitt 80 herum mehrere, hier drei, Drainageöffnungen 86 (in Fig. 6 sind nur zwei zu sehen) ausgebildet, die in den Leckageauslauf 46 übergehen (siehe auch Fig. 1 und 2). Die Drainageöffnungen 86 weiten sich zum Leckageraum 44 hin auf und sind im Querschnitt etwa nierenförmig ausgebildet.

In der Einbaulage des Strömungsbarrierenelements 58 in dem Doppelsitzventil 10 sind die Durchtrittsöffnungen 68a im axialen Ringkörperabschnitt 66a und die Durchtrittsöffnungen 68b im axialen Ringkörperabschnitt 66b auf die Drainageöffnungen 86 im Schließglied 30 ausgerichtet, wie am besten in Fig. 2 zu sehen ist. Genauer gesagt ist jeweils eine der Durchtrittsöffnungen 68a und jeweils eine der Durchtrittsöffnungen 68b auf eine der Drainageöffnungen 86 ausgerichtet.

Nachfolgend wird nun die Funktion des Strömungsbarrierenelements 58 beschrieben.

In der Schließstellung des Doppelsitzventils 10, in der beide Schließglieder 28 und 30 sich in ihrer Schließstellung befinden, wie in Fig. 1 und 2 gezeigt ist, befindet sich das Strömungsbarrierenelement 58 lose zwischen den beiden Schließgliedern 28 und 30 etwa in einer Mittelposition, in der der radiale Ringkörperabschnitt 62 zwischen sich und dem Schließglied 28 und zwischen sich und dem Schließglied 30 einen Spalt belässt. Hierdurch kann im Fall einer Leckage bei einem Versagen der Dichtung 32 und/oder der Dichtung 38 Medium zwischen dem radialen Ringkörperabschnitt 62 und dem Schließglied 28 bzw. dem Schließglied 30 in den Leckageraum 44 und von dort über die Drainageöffnungen 86 in den Leckageauslauf 46 gelangen, so dass eine Leckagedetektion möglich ist. Die Leckage kann dabei durch die Durchtrittsöffnungen 68a bzw. 68b in den Leckageraum 44 eintreten, aber auch an den Rändern 66a bzw. 66b vorbei über die Ausnehmungen 74a bzw. 74b.

Das Strömungsbarrierenelement 58 beeinträchtigt somit die geforderte Möglichkeit der Leckagedetektion nicht.

Wird das Doppelsitzventil 10 in seine Offenstellung überführt, wird das Schließglied 30 über den oben genannten Steuermechanismus 41 nach oben unter Mitnahme des Strömungsbarrierenelements 58 zum Schließglied 28 verfahren. Dabei dichtet das Schließglied 30 gegen das Strömungsbarrierenelement 58 ab, wozu im radialen Ringkörperabschnitt 62 des Strömungsbarrierenelements 58 eine Axialdichtung 88 vorgesehen ist. Das Strömungsbarrierenelement 58 seinerseits kommt dabei dichtend gegen das Schließglied 28 in Anlage, wozu in dem Schließglied 28 eine weitere Axialdichtung 90 vorhanden ist. In der in Fig. 3 gezeigten Offenstellung des Doppelsitzventils 10 ist der Leckageraum 44 gegen den Innenraum des Ventilgehäuseabschnitts 14 abgedichtet, so dass Medium vom Inneren des Ventilgehäuseabschnitts 14 in das Innere des Ventilgehäuseabschnitts 16 übertreten kann.

Beim Anlüften des ersten Schließgliedes 28 gemäß Fig. 7 zum Zwecke der Reinigung der Dichtung 32 und des Schließgliedsitzes 34 sowie des Leckageraums 44 wird über das Innere des Ventilgehäuseabschnitts 14 ein unter Druck stehendes Reinigungsmedium in den Spalt 54 zwischen dem Schließglied 28 und dem Schließgliedsitz 34 eingeleitet.

In diesem Betriebszustand unterteilt der Ringkörper 60 des Strömungsbarrierenelements 58 zusammen mit dem Schließglied 28 den Leckageraum 44 in einen ersten Leckageraumabschnitt 92 und einen zweiten Leckageraumabschnitt 94. Das durch den Spalt 54 eingeleitete unter Druck stehende Reinigungsmedium bewirkt, dass das Strömungsbarrierenelement 58 axial in Richtung zum zweiten Schließglied 30 hin gedrückt wird, bis der Rand 66a des axialen Ringkörperabschnitts 64a und der Rand 76a der Ausnehmung 74a einander hintergreifend dichtend in Anlage kommen. Das Strömungsbarrierenelement 58 ist dadurch am Schließglied 28 verriegelt. Die Radialdichtung 78 des radialen Ringkörperabschnitts 62 oder, wenn keine derartige Dichtung vorgesehen ist, allein der radiale Ringkörperabschnitt 62, dichten den ersten Leckageraumabschnitt 92 gegen eine Direktbeaufschlagung der Dichtung 36 des sich in Schließstellung befindlichen Schließgliedes 30 ab. Auf diese Weise gewährleistet das Strömungsbarrierenelement 58 eine Abschattung bzw. die Vermeidung einer Direktbeaufschlagung der Dichtung 36 mit Reinigungsmedium.

Aus dem ersten Leckageraumabschnitt 92 tritt das unter Druck stehende Reinigungsmedium in die Durchtrittsöffnungen 68a des axialen Ringkörperabschnitts 66a ein, wodurch das Reinigungsmedium in Form dünner Strahlen unmittelbar in die Drainageöffnungen 86 gerichtet wird. In dem zweiten Leckageraumabschnitt 94 baut sich dabei kein Überdruck auf. Im Gegenteil, der zweite Leckageraumabschnitt 94 befindet sich dabei auf Atmosphärendruck, d.h. auf dem Druck, der am Ende des Leckageauslaufs 46 ins Freie herrscht, üblicherweise ein Druck von etwa 1010 mbar. Die Finger 70 des Strömungsbarrierenelements 58 sind in Bezug auf die Durchtrittsöffnungen 68a so versetzt angeordnet, dass sie für die Reinigungsmediumstrahlen auf ihrem Weg in die Drainageöffnungen 86 kein Hindernis darstellen. In den Durchtrittsöffnungen 68a, die beispielsweise einen Querschnitt von wenigen Millimetern, beispielsweise 1 bis 4 mm, aufweisen, wird das Reinigungsmedium stark beschleunigt, so dass die aus den Durchtrittsöffnungen 68a austretenden Reinigungsmediumstrahlen in der Art einer Wasserstrahlpumpe wirken. Bei Messungen des Druckes im Bereich der Dichtung 36 des zweiten Schließgliedes 30 hat sich nämlich herausgestellt, dass sogar ein Unterdruck, d.h. ein Druck unterhalb des Atmosphärendrucks, im zweiten Leckageraumabschnitt 94 vorhanden ist. Da sich das Dichtelement 38 im zweiten Leckageraumabschnitt 94 befindet, befindet sich dieses im druckfreien Raum.

In jedem Fall ist der Druck im zweiten Leckageraumabschnitt 94 gegenüber dem Druck im ersten Leckageraumabschnitt 92 stark reduziert. Dies ermöglicht es, dass der Durchtrittsquerschnitt 50 des Leckageauslaufs 46 bereits unmittelbar im Anschluss an den Leckageraum 44 wesentlich kleiner sein kann als der Querschnitt des Leckageraums 44 selbst, wodurch der rohrförmige Fortsatz 48 des Schließgliedes 30 materialsparend mit geringerem Durchmesser gefertigt werden kann, wie bereits oben eingangs mit Bezug auf Fig. 1 beschrieben wurde.

Im umgekehrten Fall des Anlüftens des zweiten Schließgliedes 30 gemäß Fig. 8 ist die Funktionsweise des Strömungsbarrierenelements 58 entsprechend. Durch den Spalt 56 zwischen dem zweiten Schließglied 30 und dem zweiten Schließgliedsitz 38 wird unter Druck stehendes Reinigungsmedium zum Zwecke der Reinigung der Dichtung 36 und des Schließgliedsitzes 38 eingeleitet. Auch hier unterteilt wiederum der Ringkörper 60 des Strömungsbarrierenelements 58 den Leckageraum 44 in einen ersten Leckageraumabschnitt 92b und einen zweiten Leckageraumabschnitt 94b, wobei nun der axiale Ringkörperabschnitt 64b zusammen mit dem radialen Ringkörperabschnitt 62 und dem Schließglied 30 den ersten Leckageraumabschnitt 92b begrenzt. Durch das unter Druck stehende Reinigungsmedium wird das Strömungsbarrierenelement 58 zum ersten Schließglied 28 hin gedrückt, wodurch der Rand 66b des axialen Ringkörperabschnitts 64b mit dem Rand 76b der Ausnehmung 74b einander hintergreifend dichtend in Anlage kommt und das Strömungsbarrierenelement 58 am Schließglied 30 verriegelt ist. Das unter Druck stehende Reinigungsmedium tritt nun durch die Durchtrittsöffnungen 68b des axialen Ringkörperabschnitts 66b hindurch und tritt aus diesen in den zweiten Leckageraumabschnitt 94b über, und aufgrund der auf die Drainageöffnungen 86 weisenden Ausrichtung der Durchtrittsöffnungen 68b treten die Reinigungsmediumstrahlen unmittelbar in die Drainageöffnungen 86 ein. Auch hierbei erfahren die Reinigungsmediumstrahlen keine Hindernisse, und das Reinigungsmedium kann über die Drainageöffnungen 86 druckfrei in den Leckageauslauf 46 strömen. Gemäß Fig. 8 befindet sich das Dichtelement 32 im zweiten Leckageraumabschnitt 94b und somit im druckfreien Raum.

Allgemein sind die Durchtrittsöffnungen 68a, 68b im Querschnitt und/oder in ihrer Anzahl so bemessen, dass in dem zweiten Leckageraumabschnitt 94 bzw. 94b im Wesentlichen Atmosphärendruck oder sogar ein Unterdruck unter Atmosphärendruck herrscht, wenn das Doppelsitzventil 10 gemäß Fig. 7 und 8 einem Reinigungsprozess unterzogen wird.

Eine weitere Verbesserung der Reinigungsfähigkeit des Doppelsitzventils besteht darin, dass gemäß Fig. 6 außenumfänglich an einem Verschlussteil 98 des zweiten Schließgliedes 30 umfänglich verteilt eine Mehrzahl von Ausnehmungen 96 angeordnet sind. Das Verschlussteil 98 dichtet nämlich umfänglich gegen eine Dichtung 100 ab, und da das Doppelsitzventil 10 so ausgelegt ist, dass in der Offenstellung das zweite Schließglied 30 axial nach oben verfahren wird, muss das Verschlussteil 98 außenseitig reinigbar sein. Hierzu dienen die Ausnehmungen 96. Beim Anlüften des zweiten Schließgliedes 30 kommen die Ausnehmungen 96 auf Höhe der Dichtung 100 zu liegen, wodurch das Reinigungsmedium durch die Ausnehmungen 96 an der Dichtung 100 vorbei nach unten abgeleitet werden kann. Im Schließzustand des Schließgliedes 30 befinden sich die Ausnehmungen 96 oberhalb der Dichtung 100, so dass die Dichtung 100 und das Verschlussteil 98 dichtend in Anlage stehen. Die Ausnehmungen 96 sind bezüglich der Längsachse 22 etwas schräg ausgerichtet, wodurch die Strömung des Reinigungsmediums verbessert und eine vollumfängliche Spülung und Reinigung des Verschlussteils 98 gewährleistet wird.

## Patentansprüche

1. Doppelsitzventil zur Trennung von Medien, mit einem Ventilgehäuse (12), das Anschlussstutzen (18, 20) für eine erste Rohrleitung und eine zweite Rohrleitung aufweist, mit einem ersten Schließglied (28) und einem diesem zugeordneten ersten Schließgliedsitz (34), wobei das erste Schließglied (28) in seiner Schließstellung über zumindest ein Dichtelement (32) mit dem ersten Schließgliedsitz (34) dichtend zusammenwirkt, und mit einem vom ersten Schließglied (28) axial beabstandeten zweiten Schließglied (30) und einem diesem zugeordneten zweiten Schließgliedsitz (38), wobei das zweite Schließglied (30) in seiner Schließstellung über zumindest ein Dichtelement (36) mit dem zweiten Schließgliedsitz (38) dichtend zusammenwirkt, wobei die beiden Schließglieder (28, 30) unabhängig voneinander von ihrem jeweiligen Schließgliedsitz (34, 38) anlüftbar sind, wobei zwischen den beiden Schließgliedern (28, 30) ein Leckageraum (44) vorhanden ist, der in einen Leckageauslauf (46) mündet, und wobei zwischen den beiden Schließgliedern (28, 30) ein Strömungsbarrierenelement (58) angeordnet ist, das beim Anlüften des einen Schließgliedes (28, 30) das Dichtelement (32, 36) und/oder den Schließgliedsitz (34, 38) des anderen Schließgliedes (28, 30) gegen eine Direktanströmung durch ein in den Leckageraum (44) eingeleitetes Medium abschattet, wobei das Strömungsbarrierenelement (58) einen Ringkörper (60) aufweist, wobei der Ringkörper (60) in der Anlüftstellung zumindest eines der Schließglieder (28, 30) zusammen mit diesem den Leckageraum (44) in einen ersten Leckageraumabschnitt(92, 92b) und einen zweiten Leckageraumabschnitt (94, 94b) unterteilt, **dadurch gekennzeichnet, dass** der Ringkörper (60) so ausgebildet ist, dass Medium durch den Ringkörper (60) hindurch vom ersten Leckageraumabschnitt (92, 92b) in den zweiten Leckageraumabschnitt (94, 94b) übertreten kann, derart, dass der Druck im zweiten Leckageraumabschnitt (94, 94b) gegenüber dem Druck im ersten Leckageraumabschnitt (92, 92b) reduziert ist, und das Medium von dem zweiten Leckageraumabschnitt (94, 94b) zum Leckageauslauf (46) gelangt.

2. Doppelsitzventil nach Anspruch 1, **dadurch gekennzeichnet, dass** der Druck im zweiten Leckageraumabschnitt (94, 94b) beim Übertritt von Medium vom ersten Leckageraumabschnitt (92, 92b) im Wesentlichen auf Atmosphärendruck am Leckageauslauf (46) oder sogar auf einen Druck unterhalb des Atmosphärendrucks reduziert wird.

3. Doppelsitzventil nach Anspruch 1 oder 2, **dadurch gekennzeichnet, dass** der Ringkörper (60) einen sich radial erstreckenden Ringkörperabschnitt (62) und einen sich daran anschließenden, sich axial erstreckenden Ringkörperabschnitt (64a, 64b) aufweist, wobei der axiale Ringkörperabschnitt (64a, 64b) beim Anlüften des einen Schließgliedes (28, 30) und Beaufschlagen des ersten Leckageraumabschnitts (92, 92b) mit Medium mit diesem Schließglied (28, 30) dichtend in Anlage steht.

4. Doppelsitzventil nach Anspruch 3, **dadurch gekennzeichnet, dass** der axiale Ringkörperabschnitt (64a, 64b) und das Schließglied (28, 30) sich gegenseitig hintergreifende Ränder (66a, 66b, 76a, 76b) aufweisen, über die der axiale Ringkörperabschnitt (64a, 64b) mit dem Schließglied (28, 30) dichtend in Anlage kommt.

5. Doppelsitzventil nach einem der Ansprüche 1 bis 4, **dadurch gekennzeichnet, dass** das Strömungsbarrierenelement (58) lose zwischen den Schließgliedern (28, 30) und relativ zu diesen axial beweglich angeordnet ist.

6. Doppelsitzventil nach einem der Ansprüche 1 bis 5, **dadurch gekennzeichnet, dass** der Ringkörper (60) des Strömungsbarrierenelements (58) eine Mehrzahl von Durchtrittsöffnungen (68a, 68b) aufweist, durch die beim Anlüften des einen Schließgliedes (28, 30) Medium vom ersten Leckageraumabschnitt (92, 92b) in den zweiten Leckageraumabschnitt (94, 94b) übertreten kann, wobei die Anzahl und/oder der Einzelquerschnitt der Durchtrittsöffnungen (68a, 68b) so bemessen ist, dass der Druck im zweiten Leckageraumabschnitt (94, 94b) beim Übertritt von Medium durch die Durchtrittsöffnungen (68a, 68b) im Wesentlichen auf Atmosphärendruck oder darunter liegt.

7. Doppelsitzventil nach einem der Ansprüche 1 bis 6, **dadurch gekennzeichnet, dass** der Leckageraum (44) über eine oder mehrere Drainageöffnungen (86) in einem der beiden Schließglieder (28, 30) mit dem Leckageauslauf (46) verbunden ist, und dass die Durchtrittsöffnungen (68a, 68b) in dem Ringkörper (60) auf die eine oder mehreren Drainageöffnungen (86) ausgerichtet sind.

8. Doppelsitzventil nach Anspruch 6 oder 7, **dadurch gekennzeichnet, dass** sich die eine oder mehreren Drainageöffnungen (86) zum Leckageraum (44) hin aufweiten.

9. Doppelsitzventil nach einem der Ansprüche 1 bis 8, **dadurch gekennzeichnet, dass** das Strömungsbarrierenelement (58) verdrehgesichert zwischen den Schließgliedern (28, 30) angeordnet ist.

10. Doppelsitzventil nach einem der Ansprüche 1 bis 9, **dadurch gekennzeichnet, dass** das Strömungsbarrierenelement (58) gehäuseseitig über eine Dichtung (78) oder ein Gleitelement an dem Gehäuse (12) anliegt.

11. Doppelsitzventil nach einem der Ansprüche 1 bis 9, **dadurch gekennzeichnet, dass** das Strömungsbarrierenelement (58) ohne zusätzliche Dichtung oder Gleitelement unmittelbar an dem Gehäuse (12) anliegt.

12. Doppelsitzventil nach einem der Ansprüche 1 bis 11, **dadurch gekennzeichnet, dass** der Ringkörper (60) des Strömungsbarrierenelements (58) in der Schließstellung beider Schließglieder (28, 30) mit keinem der Schließglieder (28, 30) dichtend in Anlage steht.

13. Doppelsitzventil nach einem der Ansprüche 1 bis 12, **dadurch gekennzeichnet, dass** der Ringkörper (60) in der Offenstellung beider Schließglieder (28, 30) mit beiden Schließgliedern (28, 30) dichtend in Anlage steht.

14. Doppelsitzventil nach einem der Ansprüche 1 bis 13, **dadurch gekennzeichnet, dass** zumindest der Ringkörper (60) des Strömungsbarrierenelements (58) aus einem Kunststoff, insbesondere PEEK gefertigt ist.

## Claims

1. A double seat valve for separating media, comprising a valve housing (12), which has connectors (18, 20) for a first pipeline and a second pipeline, a first closing member (28) and a first closing member seat (34) assigned thereto, wherein the first closing member (28) in its closed position cooperates in a sealing manner with the first closing member seat (34) via at least one sealing element (32), and a second closing member (30) axially spaced from the first closing member (28), and a second closing member seat (38) assigned to said second closing member, wherein the second closing member (30) in its closed position cooperates in a sealing manner with the second closing member seat (38) via at least one sealing element (36), wherein the two closing members (28, 30) can be lifted independently of one another from their respective closing member seat (34, 38), wherein a leakage space (44) is provided between the two closing members (28, 30) and discharges into a leakage outlet (46), and wherein a flow barrier element (58) is arranged between the two closing members (28, 30) and, when one of the closing members (28, 30) is lifted, shadows the sealing element (32, 36) and/or the closing member seat (34, 38) of the other closing member (28, 30) against direct impingement by a medium fed into the leakage space (44), wherein the flow barrier element (58) has an annular body (60), wherein the annular body (60), in the lifted position of at least one of the closing members (28, 30), together with that closing member divides the leakage space (44) into a first leakage space portion (92, 92b) and a second leakage space portion (94, 94b), **characterized in that** the annular body (60) is formed such that medium can pass through the annular body (60) from the first leakage space portion (92, 92b) into the second leakage space portion (94, 94b) such that the pressure in the second leakage space portion (94, 94b) is reduced compared to the pressure in the first leakage space portion (92, 92b), and the medium reaches the leakage outlet (46) from the second leakage space portion (94, 94b).

2. The double seat valve of claim 1, **characterized in that**, when medium passes from the first leakage space portion (92, 92b), the pressure in the second leakage space portion (94, 94b) is reduced substantially to atmospheric pressure at the leakage outlet (46) or even to a pressure below the atmospheric pressure.

3. The double seat valve of claim 1 or 2, **characterized in that** the annular body (60) has a radially extending annular body portion (62) and an adjoining axially extending annular body portion (64a, 64b), wherein, when one closing member (28, 30) is lifted and the first leakage space portion (92, 92b) is impinged by medium, the axial annular body portion (64a, 64b) contacts that closing member (28, 30) in a sealing manner.

4. The double seat valve of claim 3, **characterized in that** the axial annular body portion (64a, 64b) and the closing member (28, 30) have edges (66a, 66b, 76a, 76b) engaging one another from behind, via which the axial annular body portion (64a, 64b) contacts the closing member (28, 30) in a sealing manner.

5. The double seat valve of any one of claims 1 through 4, **characterized in that** the flow barrier element (58) is arranged loosely between the closing members (28, 30) and axially movably relative thereto.

6. The double seat valve of any one of claims 1 through 5, **characterized in that** the annular body (60) of the flow barrier element (58) has a plurality of apertures (68a, 68b), through which, when one closing member (28, 30) is lifted, medium can pass from the first leakage space portion (92, 92b) into the second leakage space portion (94, 94b), wherein the number and/or individual cross section of the apertures (68a, 68b) is dimensioned such that the pressure in the second leakage space portion (94, 94b) is substantially at atmospheric pressure or therebelow when medium passes through the apertures (68a, 68b).

7. The double seat valve of any one of claims 1 through 6, **characterized in that** the leakage space (44) is connected to the leakage outlet (46) via one or more drainage openings (86) in one of the two closing members (28, 30), and **in that** the apertures (68a, 68b) in the annular body (60) are aligned with the one or more drainage openings (86).

8. The double seat valve of claim 6 or 7, **characterized in that** the one or more drainage openings (86) widen toward the leakage space (44).

9. The double seat valve of any one of claims 1 through 8, **characterized in that** the flow barrier element (58) is arranged between the closing members (28, 30) in a manner secured against rotation.

10. The double seat valve of any one of claims 1 through 9, **characterized in that** the flow barrier element (58) bears against the housing (12) on the housing side via a seal (78) or a sliding element.

11. The double seat valve of any one of claims 1 through 9, **characterized in that** the flow barrier element (58) bears directly against the housing (12), without an additional seal or sliding element.

12. The double seat valve of any one of claims 1 through 11, **characterized in that** the annular body (60) of the flow barrier element (58) is not in contact in a sealing manner with either of the closing members (28, 30) in the closed position of both closing members (28, 30).

13. The double seat valve of any one of claims 1 through 12, **characterized in that** the annular body (60) contacts both closing members (28, 30) in a sealing manner in the open position of both closing members (28, 30).

14. The double seat valve of any one of claims 1 through 13, **characterized in that** at least the annular body (60) of the flow barrier element (58) is manufactured from a plastics material, in particular PEEK.

## Revendications

1. Vanne à double siège conçue pour séparer des milieux, avec un boîtier de vanne (12) qui présente des tubulures de raccordement (18, 20) pour une première conduite tubulaire et une seconde conduite tubulaire, avec un premier organe de fermeture (28) et un premier siège d'organe de fermeture (34) associé à celui-ci, le premier organe de fermeture (28) coagissant de manière étanche dans sa position de fermeture par au moins un élément étanche (32) avec le premier siège d'organe de fermeture (34), et avec un second organe de fermeture (30) espacé axialement du premier organe de fermeture (28) et un second siège d'organe de fermeture (38) associé à celui-ci, le second organe de fermeture (30) coagissant de manière étanche dans sa position de fermeture sur au moins un élément étanche (36) avec le second siège d'organe de fermeture (38), les deux organes de fermeture (28, 30) pouvant être soulevés indépendamment l'un de l'autre de leur siège d'organe de fermeture respectif (34, 38), entre les deux organes de fermeture (28, 30) se trouvant un espace de fuite (44) qui débouche dans une sortie de fuite (46), et entre les deux organes de fermeture (28, 30) étant agencé un élément barrière d'écoulement (58) qui masque lors du soulèvement d'un organe de fermeture (28, 30) l'élément étanche (32, 36) et/ou le siège d'organe de fermeture (34, 38) de l'autre organe de fermeture (28, 30) contre un afflux direct par un milieu introduit dans l'espace de fuite (44), l'élément barrière d'écoulement (58) présentant un corps annulaire (60), le corps annulaire (60) divisant dans la position de soulèvement au moins d'un des organes de fermeture (28, 30) conjointement avec celui-ci l'espace de fuite (44) en une première section d'espace de fuite (92, 92b) et une seconde section d'espace de fuite (94, 94b), **caractérisée en ce que** le corps annulaire (60) est réalisé de sorte que le milieu puisse passer par le corps annulaire (60) de la première section d'espace de fuite (92, 92b) à la seconde section d'espace de fuite (94, 94b) de telle manière que la pression dans la seconde section d'espace de fuite (94, 94b) soit réduite par rapport à la pression dans la première section d'espace de fuite (92, 92b) et le milieu parvienne de la seconde section d'espace de fuite (94, 94b) à la sortie de fuite (46).

2. Vanne à double siège selon la revendication 1, **caractérisée en ce que** la pression dans la seconde section d'espace de fuite (94, 94b) est réduite lors du passage du milieu de la première section d'espace de fuite (92, 92b) sensiblement à la pression atmosphérique sur la sortie de fuite (46) ou même à une pression inférieure à la pression atmosphérique.

3. Vanne à double siège selon la revendication 1 ou 2, **caractérisée en ce que** le corps annulaire (60) présente une section de corps annulaire (62) s'étendant radialement et une section de corps annulaire (64a, 64b) s'étendant axialement, contiguë à celle-ci, la section de corps annulaire (64a, 64b) axiale étant en appui étanche lors du soulèvement d'un organe de fermeture (28, 30) et de l'alimentation de la première section d'espace de fuite (92, 92b) en milieu avec cet organe de fermeture (28, 30).

4. Vanne à double siège selon la revendication 3, **caractérisée en ce que** la section de corps annulaire axiale (64a, 64b) et l'organe de fermeture (28, 30) présentent des bords (66a, 66b, 76a, 76b) venant en prise les uns derrière les autres, par lesquels la section de corps annulaire (64a, 64b) axiale vient en appui étanche avec l'organe de fermeture (28, 30).

5. Vanne à double siège selon l'une quelconque des revendications 1 à 4, **caractérisée en ce que** l'élément barrière d'écoulement (58) est agencé de manière lâche entre les organes de fermeture (28, 30) et de manière mobile axialement par rapport à ceux-ci.

6. Vanne à double siège selon l'une quelconque des revendications 1 à 5, **caractérisée en ce que** le corps annulaire (60) de l'élément barrière de l'écoulement (58) présente une pluralité d'ouvertures de passage (68a, 68b), par lesquelles lors du soulèvement d'un organe de fermeture (28, 30), un milieu peut passer de la première section d'espace de fuite (92, 92b) à la seconde section d'espace de fuite (94, 94b), le nombre et/ou la section transversale individuelle des ouvertures de passage (68a, 68b) étant dimensionnée de sorte que la pression dans la seconde section d'espace de fuite (94, 94b) se trouve sensiblement à la pression atmosphérique ou dessous lors du passage du milieu par les ouvertures de passage (68a, 68b).

7. Vanne à double siège selon l'une quelconque des revendications 1 à 6, **caractérisée en ce que** l'espace de fuite (44) est relié par une ou plusieurs ouvertures de drainage (86) dans l'un des deux organes de fermeture (28, 30) avec la sortie de fuite (46) et **en ce que** les ouvertures de passage (68a, 68b) sont orientées dans le corps annulaire (60) vers l'une ou plusieurs ouvertures de drainage (86).

8. Vanne à double siège selon la revendication 6 ou 7, **caractérisée en ce que** l'une ou plusieurs ouvertures de drainage (86) s'élargissent vers l'espace de fuite (44).

9. Vanne à double siège selon l'une quelconque des revendications 1 à 8, **caractérisée en ce que** l'élément barrière d'écoulement (58) est agencé de sans pouvoir tourner entre les organes de fermeture (28, 30).

10. Vanne à double siège selon l'une quelconque des revendications 1 à 9, **caractérisée en ce que** l'élément barrière d'écoulement (58) repose côté boîtier par le biais d'une garniture (78) ou d'un élément glissant contre le boîtier (12).

11. Vanne à double siège selon l'une quelconque des revendications 1 à 9, **caractérisée en ce que** l'élément barrière d'écoulement (58) repose sans garniture supplémentaire ou élément glissant directement contre le boîtier (12).

12. Vanne à double siège selon l'une quelconque des revendications 1 à 11, **caractérisée en ce que** le corps annulaire (60) de l'élément barrière d'écoulement (58) n'est en appui étanche dans la position de fermeture des deux organes de fermeture (28, 30) avec aucun des organes de fermeture (28, 30).

13. Vanne à double siège selon l'une quelconque des revendications 1 à 12, **caractérisée en ce que** le corps annulaire (60) est en appui étanche dans la position ouverte des deux organes de fermeture (28, 30) avec les deux organes de fermeture (28, 30).

14. Vanne à double siège selon l'une quelconque des revendications 1 à 13, **caractérisée en ce qu'**au moins le corps annulaire (60) de l'élément barrière d'écoulement (58) est fabriqué en une matière plastique, en particulier en PEEK.
